# EUROPÄISCHE PATENTANMELDUNG

(11) **EP 0 882 874 A2**
(43) Veröffentlichungstag der Anmeldung: **09.12.1998**
(21) Anmeldenummer: 98109303.2
(22) Anmeldetag: 22.05.1998
(51) Int. Cl.: F01N 3/20

(54) **Elektrische Kontaktierung eines Heizleiters eines elektrisch beheizbaren Katalysators**

(30) Priorität: 03.06.1997 DE 19723121
(71) Anmelder: Heraeus Sensor-Nite Technik GmbH, 63450 Hanau (DE)
(72) Erfinder: Renz, Ulrich, 71111 Waldenbuch (DE); Hotz, Uwe, 76597 Loffenau (DE)
(74) Vertreter: Kühn, Hans-Christian

(57) **Zusammenfassung**

Ein elektrisch beheizbarer Katalysator für die Reinigung von Abgas aus Verbrennungsprozessen, vorzugsweise von Verbrennungsmotoren, mit einem Gehäuse und einem in dem Gehäuse angeordneten Träger, vorzugsweise mit einer Vielzahl von zueinander parallel verlaufenden, von dem zu reinigenden Abgas durchströmbaren Kanälen, wobei der Träger (1) wenigstens eine gegenüber dem Abgas katalytisch wirksame Schicht aufweist, wobei außerdem zumindest ein Teilbereich der Oberfläche des Trägers (1) zumindest eine elektrisch leitende Widerstandsheizschicht (3) mit elektrischen Anschlußbereichen aufweist, die gegenüber dem Träger (1) mittels einer Isolierschicht (2) elektrisch isoliert ist, und mit wenigstens einem Anschlußelement (8), das die Widerstandsheizschicht (3) in den elektrischen Anschlußbereichen kontaktiert, ist einfach herzustellen und im Betrieb zuverlässig, wenn wenigstens ein Anschlußelement (8) die Widerstandsheizschicht (3) und die Isolierschicht (2) sowie den Träger (1) durchsetzt.

## Beschreibung

Die Erfindung betrifft einen elektrisch beheizbaren Katalysator mit den Merkmalen des Oberbegriffs des Anspruchs 1.

Ein gattungsgemäßer Katalysator ist aus der DE 42 43 904 A1 bekannt. Der bekannte Katalysator weist ein äußeres, geschlossenes Gehäuse auf, in dem ein sogenannter Monolith eingebettet ist. Der Monolith des Katalysators, im Zusammenhang dieser Patentanmeldung auch Träger genannt, ist im Wesentlichen eine Schichtanordnung aus glatten, ebenen Metallfolien oder -blechen und gewellten Metallfolien oder -blechen. Die gewellten Metallfolien erstrecken sich quer zum Abgasstrom, wobei die Wellen parallel zum Abgasstrom angeordnet sind und jeweils Kanäle für das durchströmende Abgas bilden. Der Träger des Katalysators ist mit einem Washcoat beschichtet, in den Platinmetalle eingelagert oder aufgebracht sind. Jede dritte bzw. jede vierte der flachliegenden Metallfolien steht in Querrichtung der Abgasströmung seitlich über den mit Kanälen durchsetzten Bereich des Monolithen hinaus und weist in diesem Bereich zu jeder Seite des Monolithen eine ringförmige, in Dichtschichttechnik aufgedruckte Kontaktfläche auf. Zwischen den beiden Kontaktflächen eines glatten Bleches verläuft eine gegenüber dem Trägerblech elektrisch isolierte, in Dichtschichttechnik aufgedruckte Widerstandsheizschicht. Die elektrische Kontaktierung der mit Heizelementen versehenen Metallfolien erfolgt über elektrisch leitende Ringe, die zwischen je zwei sich gegenüber liegenden Anschlußbereichen der Metallfolien angeordnet sind. Die Ringe sind jeweils zwischen den überstehenden Enden der Metallfolien zu einem Stapel von der Höhe des Monolithen angeordnet und mit einem durchgehenden Schraubelement zusammengepreßt, so daß die Druckkraft für eine dauerhafte Kontaktierung der Ringe mit den Anschlußbereichen sorgt. Die Ringe wiederum sind durch hochtemperaturfest gelötete Anschlußdrähte mit einer elektrischen Spannungsversorgung verbunden.

Der bekannte elektrisch beheizbare Katalysator ist in der Herstellung relativ aufwendig.

Es gibt noch weitere technische Lösungen für elektrisch beheizbare Katalysatoren, bei denen entweder die metallische Trägerfolie des Monolithen direkt vom Strom durchflossen und so erhitzt wird oder bei denen ein separates elektrisches Heizelement die Trägerstruktur des Katalysators indirekt erhitzt. Beispiele für die sonstigen technischen Lösungen finden sich in der DE-PS 563 757 oder in der WO89/10470. Diese technischen Lösungen liegen von dem Erfindungsgegenstand weiter entfernt als die oben genannte DE 42 43 904 A1.

Es ist Aufgabe der Erfindung, einen gattungsgemäßen elektrisch beheizbaren Katalysator so fortzubilden, daß eine einfachere Fertigung möglich ist.

Diese Aufgabe wird von einem elektrisch beheizbaren Katalysator mit den Merkmalen des Anspruchs 1 gelöst.

Weil die Anschlußelemente die Widerstandsheizschicht und die Isolierschicht sowie den Träger durchsetzen, sind die Anschlußelemente in einer Richtung parallel zu den Schichten sowie zu dem Träger formschlüssig fixiert. Etwaige Reste, die durch thermische Ausdehnung oder Beschleunigungskräfte auf die Anschlußelemente einwirken, können auf diese Weise unmittelbar in den Träger eingeleitet werden. Die den elektrischen Kontakt bildenden Stellen werden auf diese Weise entlastet.

Es ist dabei vorteilhaft, wenn der Träger im Bereich der Anschlußbereiche Durchbrüche, beispielsweise in Gestalt von Ausstanzungen, aufweist. In diesem Fall können die Anschlußelemente einfach in die Durchbrüche eingesetzt werden. Wenn darüber hinaus auf der der Widerstandsheizschicht abgewandten Seite des Trägers eine zweite Isolierschicht vorgesehen ist, kann das jeweilige Anschlußelement auf der der Widerstandsheizschicht gegenüberliegenden Seite gegen die Isolierschicht verformt werden. Dabei weist die zweite Isolierschicht vorteilhaft etwa dieselben Abmessungen auf wie der Anschlußbereich, so daß nicht unnötig viel Material aufgetragen werden muß. Trotzdem ist es vorteilhaft, wenn jeder Durchbruch von einer zweiten Isolierschicht umgeben ist, weil dann jedes Anschlußelement gegen die der Widerstandsheizschicht abgewandten Oberfläche verformt werden kann.

Die Anschlußelemente werden zu einer einfachen und stabilen Befestigung möglichst formschlüssig in den Durchbrüchen gehalten, also nicht nur formschlüssig parallel zu den Schichten und zu dem Träger, sondern auch in der Einsetzrichtung formschlüssig in den Durchbrüchen befestigt. Dabei sollen die Anschlußelemente innerhalb der Durchbrüche von dem Träger beabstandet bleiben, damit kein elektrischer Kontakt zwischen den Anschlußelementen und dem Träger entsteht. Eine einfache Gestaltung ergibt sich, wenn die Anschlußelemente einen hülsenförmigen Ansatz aufweisen. Dieser hülsenförmige Ansatz kann in den Durchbrüchen zentriert werden und weist dann, wenn er im Durchmesser kleiner ist als der Innendurchmesser der Durchbrüche, einen ausreichenden Abstand von dem Träger auf. Eine besonders einfache Konstruktion ergibt sich, wenn die Anschlußelemente in den Durchbrüchen durch plastische Verformung gehalten, insbesondere vernietet sind. Die Anschlußelemente können auch dadurch befestigt werden, daß sie mit den Anschlußbereichen verschweißt sind. Diese Maßnahme kann allein oder zusätzlich zum Vernieten vorgesehen sein. Dabei kommen insbesondere thermische Schweißverfahren wie Widerstandspreßschweißen oder Laserschweißen oder auch Ultraschallschweißen auf die Widerstandsheizschicht in Frage. Die Verschweißung von Anschlußelement und Widerstandsheizschicht ist besonders zuverlässig, wenn eine zusätzliche Kontaktschicht aufgebracht wird.

Auch wenn die Befestigung der Anschlußelemente in dem Träger erfindungsgemäß außerordentlich stabil ist, ist es vorteilhaft, wenn die Anschlußelemente wenigstens in Querrichtung zur Abgasströmung federelastisch ausgebildet sind. Sie sind dann gegen Erschütterungen und thermische Ausdehnungen unempfindlicher.

Eine einfache Konstruktion ergibt sich, wenn je zwei Widerstandsheizschichten an benachbarten Anschlußbereichen ein gemeinsames Anschlußelement zugeordnet ist. Dabei kann die Kontaktierung von zwei Widerstandsheizschichten mit einem Anschlußelement durch einen durchgehenden, hülsenförmigen Ansatz erfolgen, der beide Träger und beide Widerstandsheizschichten durchsetzt und gegen eine der Widerstandsheizschichten vernietet wird. Die betreffenden Träger werden dabei vorteilhaft von einem Abstandshalter beabstandet.

Im folgenden wird ein Ausführungsbeispiel des erfindungsgemäßen Katalysators anhand der Zeichnung beschrieben.

Es zeigen:
- Figur 1:: eine erfindungsgemäße Kontaktierung eines Anschlußelements mit einer Widerstandsheizschicht;
- Figur 2:: das Anschlußelement gemäß Figur 1 in unverformtem Zustand;
- Figur 3:: eine andere Ausführungsform eines Anschlußelements; sowie
- Figur 4:: den Anschluß zweier Trägerfolien mit je einer Widerstandsheizschicht mittels eines gemeinsamen Anschlußelements.

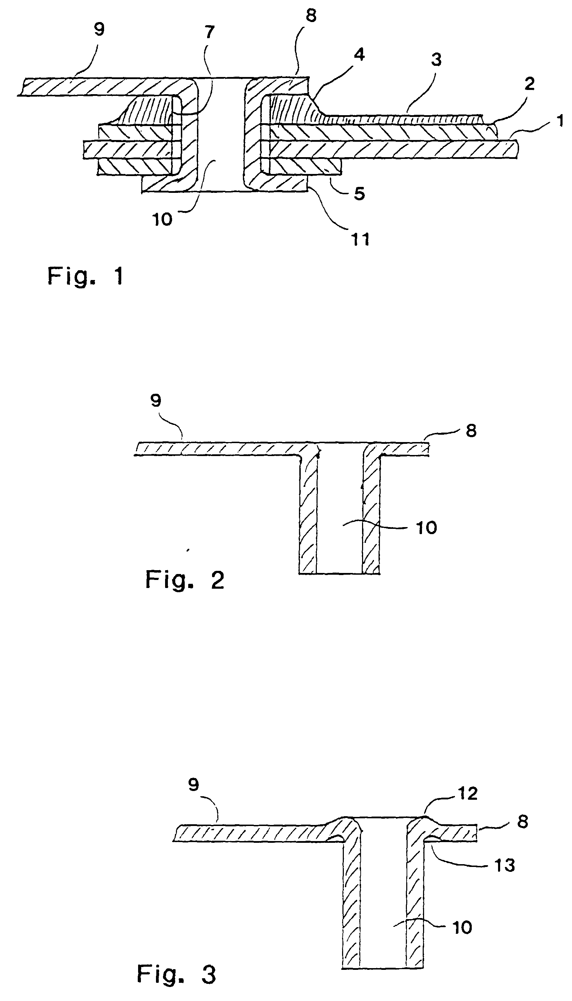

In der Figur 1 ist der Anschlußbereich einer elektrisch beheizbaren Trägerfolie 1 eines Metallkatalysators dargestellt. Die Trägerfolie ist aus einem korrosionsbeständigen und temperaturfesten metallischen Werkstoff gefertigt und trägt auf einer Seite eine großflächig durch Siebdruck aufgebrachte Isolationsschicht 2. Die Isolationsschicht 2 wiederum trägt auf der der Trägerfolie 1 abgewandten Seite eine Widerstandsheizschicht 3, deren elektrischer Widerstand geeignet ist, mit der Bordspannung eines Kraftfahrzeugs beheizt zu werden. In einem seitlichen Bereich der Trägerfolie 1 ist die Widerstandsschicht 3 durch Aufbringen einer zusätzlichen Kontaktschicht 4 mit derselben Zusammensetzung wie die Widerstandsheizschicht 3 verdickt. Auf der der Widerstandsheizschicht 3 abgewandten Seite der Trägerfolie 1 ist auf in etwa derselben Fläche wie die Kontaktschicht 4 eine zweite Isolationsschicht 5 angeordnet, die die Trägerfolie 1 im Anschlußbereich auch auf der Zweiten Flachseite isoliert. Der gesamte Anschlußbereich wird möglichst konzentrisch zu der Verdickung 4 und der zweiten Isolationsschicht 5 von einem Durchbruch 7 durchsetzt, beispielsweise in Gestalt einer runden Ausstanzung.

In die runde Ausstanzung 7 ist ein Anschlußelement 8 eingesetzt, das beispielsweise aus einer ebenen, bandförmigen Kontaktfahne 9 mit angeformtem hülsenförmigem Abschnitt 10 gebildet ist. An dem der Anschlußfahne 9 gegenüberliegenden Ende des hülsenförmigen Abschnitts 10 ist das Anschlußelement durch Verformung umgelegt, so daß sich ein Randbereich 11 gegen die zweite Isolationsschicht 5 legt.

Das Anschlußelement 8 ist so elektrisch isoliert gegenüber der Trägerfolie 1 und in elektrischem Kontakt mit der Widerstandsheizschicht 3 in der Ausstanzung 7 befestigt.

In der Figur 2 ist das Anschlußelement 8 mit der Anschlußfahne 9 und dem hülsenförmigen Abschnitt 10 in unverformtem Zustand dargestellt. In dieser Form kann das Anschlußelement 9 in den Durchbruch 7 eingeführt werden und dann beispielsweise vernietet werden.

Die Figur 3 zeigt eine weitere Ausgestaltung eines Anschlußelements 8, bei dem am Übergang zwischen der Anschlußfahne 9 und der angeformten Hülse 10 ein ringförmiger Wulst 12 eingeformt ist, der in der Hohlkehle zwischen dem ebenen Bereich und der angeformten Hülse eine Freisparung 13 bildet.

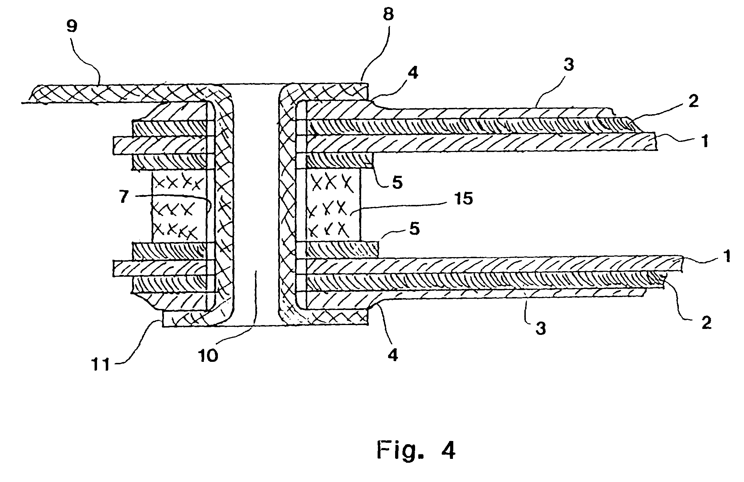

In der Figur 4 ist die elektrische Kontaktierung zweier elektrisch beheizbarer Katalysatorfolien mit einem gemeinsamen Anschlußelement 8 dargestellt.

Die vom Aufbau her der Katalysatorfolie gemäß Figur 1 entsprechenden Folien mit einer Trägerfolie 1, einer Isolationsschicht 2, einer Widerstandsheizschicht 3 mit zusätzlicher Kontaktschicht 4 und der gegenüberliegenden zweiten Isolationsschicht 5 sind zueinander so angeordnet, daß die beiden zweiten Isolationsschichten 5 sich gegenüberliegen, während die Widerstandsheizschichten 3 voneinander abgewandt sind. Im Bereich der zweiten Isolationsschichten 5 ist ein Abstandshalter 15 vorgesehen, der die Katalysatorfolien im vorgesehen Abstand hält und der auf Druck belastbar ist.

Das Anschlußelement 8 ist wie in Figur 4 so angeordnet, daß die koaxial angeordneten Durchbrüche der oberen und der unteren Trägerfolie sowie des Abstandshalters 15 von dem hülsenförmigen Abschnitt 10 durchsetzt werden, wobei eine Freisparung 7 die Trägerfolien 1 von dem hülsenförmigen Abschnitt 10 freihält. Im Randbereich 11 des hülsenförmigen Abschnitts 10 ist dieser bei diesem Ausführungsbeispiel auf die zusätzliche Kontaktschicht 4 der in Figur 4 unten liegenden Katalysatorfolie umgelegt und befestigt so das Anschlußelement 8 in dem Folienpaket, fixiert aber gleichzeitig die beiden Folien und den Abstandshalter 15 gegeneinander.

Der Randbereich 11 des hülsenförmigen Abschnitts 10 übernimmt bei diesem Ausführungsbeispiel auch die elektrische Kontaktierung der Widerstandsheizschicht 3 der unteren Katalysatorfolie. Somit übernimmt ein gemeinsames Anschlußelement 8 sowohl die mechanische als auch die elektrische Verbindung der beiden benachbarten Katalysatorfolien.

Bei der Kontaktierungslösung gemäß Figur 4 können die Isolierschichten 5 auch entfallen, wenn keine elektrische Isolation zwischen den beiden Trägerfolien erforderlich ist. Dann können die Trägerfolien 1 zur Förderung der mechanischen Stabilität auch unmittelbar mit dem Abstandshalter 15, beispielsweise durch Laserschweißen, verbunden werden.

In an sich bekannter Weise wird zur Herstellung eines elektrisch beheizbaren Katalysators eine Anzahl Trägerfolien 1 zunächst mit den Isolationsschichten 2 und 5 im Siebdruckverfahren versehen. Diese Schichten werden eingebrannt, woraufhin die elektrische Widerstandsheizschicht 3 und die zusätzliche Kontaktschicht 4 ebenfalls in Siebdrucktechnik aufgetragen wird. Sodann werden die Durchbrüche im Anschlußbereich der Katalysatorfolien, d.h. etwa mittig auf der zusätzlichen Kontaktschicht 4 ausgestanzt. Je zwei Katalysatorfolien werden mit den zweiten Isolationsschichten 5 zueinander unter Zwischenfügung eines Abstandshalters 15 angeordnet, sodann wird das Anschlußelement 8 durch die Durchbrüche hindurchgeführt und gegen die der Anschlußfahne 9 gegenüberliegenden Seiten vernietet. An dem nicht dargestellten gegenüberliegenden Ende der länglichen Katalysatorfolien wird eine entsprechende mechanische und elektrische Verbindung geschaffen. Diese "doppelten" Katalysatorfolien werden sodann in der gewünschten Anzahl, die von der Heizleistung und vom Gasdurchsatz her erforderlich ist, zu einem Monolithen zusammengefügt, jeweils endseitig mit einem gemeinsamen elektrischen Verbindungselement versehen und mit einem die katalytisch wirksamen Substanzen enthaltenden Washcoat überzogen. Der somit erhaltene Katalysatormonolith wird dann in ein Katalysatorgehäuse zum Einbau in die Abgasanlage eines Kraftfahrzeuges eingebettet.

Typische Abmessungen für die Dicke der Trägerfolie 1 sind etwa 50 µm, die Isolierschicht 2 ist etwa 20 µm dick, und die Widerstandsheizschicht etwa 10 bis 15 µm. Im Anschlußbereich ist die Widerstandsheizschicht vorzugsweise auf mehr als 60 µm verdickt. Der Abstand der beiden Trägerfolien 1 voneinander, also etwa die Höhe des Abstandshalters 15, beträgt rund 3 mm, der Innendurchmesser der Freisparung 7 beträgt bei einem bevorzugten Ausführungsbeispiel 5 mm, während der Außendurchmesser des ösenförmigen Abschnitts 10 rund 3 mm beträgt. Diese Dimensionierungen haben sich als geeignet für einen elektrisch beheizbaren Abgaskatalysator für das Abgas eines Kraftfahrzeugmotors erwiesen.

Wenn die Anschlußelemente 9 mit elektrischer Spannung beaufschlagt werden, fließt ein Strom von einer Seite der Katalysatorfolie durch die Widerstandsheizschicht 3 zu dem gegenüberliegenden Anschlußelement 8, die Widerstandsheizschicht 3 erwärmt sich und die darüber liegende Washcoatschicht soweit, daß die katalytische Wirkung gegenüber einem zu reinigenden Abgas eintritt. Durch die Infolge der katalytischen Reaktion freiwerdende Wärme und aufgrund der durch das heiße Abgas zugeführten Wärme erhitzt sich der Monolith weiter, so daß kurz nach dem Start die elektrische Versorgungsspannung abgeschaltet werden kann.

## Patentansprüche

1. Elektrisch beheizbarer Katalysator für die Reinigung von Abgas aus Verbrennungsprozessen, vorzugsweise von Verbrennungsmotoren, mit einem Gehäuse und einem in dem Gehäuse angeordneten Träger, vorzugsweise mit einer Vielzahl von zueinander parallel verlaufenden, von dem zu reinigenden Abgas durchströmbaren Kanälen, wobei der Träger wenigstens eine gegenüber dem Abgas katalytisch wirksame Schicht aufweist, wobei außerdem zumindest ein Teilbereich der Oberfläche des Trägers zumindest eine elektrisch leitende Widerstandsheizschicht mit elektrischen Anschlußbereichen aufweist, die gegenüber dem Träger mittels einer Isolierschicht elektrisch isoliert ist, und mit wenigstens einem Anschlußelement, das die Widerstandsheizschicht in den elektrischen Anschlußbereichen kontaktiert, dadurch gekennzeichnet, daß das wenigstens eine Anschlußelement die Widerstandsheizschicht und die Isolierschicht sowie den Träger durchsetzt.

2. Vorrichtung nach Anspruch 1, dadurch gekennzeichnet, daß der Träger im Bereich der Anschlußbereiche Durchbrüche aufweist.

3. Vorrichtung nach einem der vorhergehenden Ansprüche, dadurch gekennzeichnet, daß auf der der Widerstandsheizschicht abgewandten Seite des Trägers eine zweite Isolierschicht vorgesehen ist.

4. Vorrichtung nach einem der vorhergehenden Ansprüche, dadurch gekennzeichnet, daß die zweite Isolierschicht etwa dieselben Abmessungen aufweist wie der Anschlußbereich.

5. Vorrichtung nach einem der vorhergehenden Ansprüche, dadurch gekennzeichnet, daß jeder Durchbruch von einer zweiten Isolierschicht umgeben ist.

6. Vorrichtung nach einem der vorhergehenden Ansprüche, dadurch gekennzeichnet, daß die Anschlußelemente formschlüssig in den Durchbrüchen gehalten sind.

7. Vorrichtung nach einem der vorhergehenden Ansprüche, dadurch gekennzeichnet, daß die Anschlußelemente innerhalb der Durchbrüche von dem Träger beabstandet sind.

8. Vorrichtung nach einem der vorhergehenden Ansprüche, dadurch gekennzeichnet, daß die Anschlußelemente einen hülsenförmigen Ansatz aufweisen.

9. Vorrichtung nach einem der vorhergehenden Ansprüche, dadurch gekennzeichnet, daß die Anschlußelemente in den Durchbrüchen durch plastische Verformung gehalten, insbesondere vernietet sind.

10. Vorrichtung nach einem der vorhergehenden Ansprüche, dadurch gekennzeichnet, daß die Anschlußelemente mit den Anschlußbereichen verschweißt sind.

11. Vorrichtung nach einem der vorhergehenden Ansprüche, dadurch gekennzeichnet, daß die Anschlußelemente mittels thermischer Schweißverfahren wie Widerstandspreßschweißen oder Laserschweißen oder mittels Ultraschallschweißen mit der Widerstandsheizschicht verbunden sind.

12. Vorrichtung nach einem der vorhergehenden Ansprüche, dadurch gekennzeichnet, daß in den Anschlußbereichen auf die Widerstandsheizschicht eine zusätzliche Kontaktschicht aufgebracht ist.

13. Vorrichtung nach einem der vorhergehenden Ansprüche, dadurch gekennzeichnet, daß die Anschlußelemente wenigstens in Querrichtung zur Abgasströmung federelastisch ausgebildet sind.

14. Vorrichtung nach einem der vorhergehenden Ansprüche, dadurch gekennzeichnet, daß jedem Anschlußbereich ein Anschlußelement zugeordnet ist.

15. Vorrichtung nach einem der vorhergehenden Ansprüche, dadurch gekennzeichnet, daß je zwei Widerstandsheizschichten an benachbarten Anschlußbereichen ein gemeinsames Anschlußelement zugeordnet ist.

16. Vorrichtung nach einem der vorhergehenden Ansprüche, dadurch gekennzeichnet, daß alle an einer Seite des Monolithen angeordneten Anschlußelemente mit einem gemeinsamen elektrisch leitenden Verbindungselement verbunden, insbesondere verschweißt sind.
